# EUROPÄISCHE PATENTSCHRIFT

(11) **EP 2 764 803 B1**
(45) Veröffentlichungstag und Bekanntmachung des Hinweises auf die Patenterteilung: **02.11.2016**
(21) Anmeldenummer: 14153441.2
(22) Anmeldetag: 31.01.2014
(51) Int. Cl.: A47J 31/36

(54) **Kaffeevollautomat mit Spindelbrüheinheit**
Fully automatic coffee machine with a spindle brewing unit
Machine à café entièrement automatique avec une unité d'infusion à broche

(30) Priorität: 08.02.2013 DE 102013202151
(43) Veröffentlichungstag der Anmeldung: 13.08.2014
(73) Patentinhaber: BSH Hausgeräte GmbH, 81739 München (DE)
(72) Erfinder: Haslacher, Christian, 5303 Thalgau (AT); Huber, Michael, 6341 Ebbs (AT); Strobl, Robert, 83246 Unterwössen (DE)

(56) Entgegenhaltungen:
- EP-A1- 0 468 915
- EP-A1- 0 521 561
- EP-A1- 1 743 553
- WO-A1-2009/010275
- WO-A2-2012/122118
- US-A- 5 823 096

## Beschreibung

Die Erfindung betrifft einen Kaffeevollautomaten, umfassend einen Aufnahmerahmen für eine Spindelbrüheinheit mit einer Brühkammer und einer Gewindespindel zum Antrieb der Brühkammer, wobei die Brühkammer parallel zur Drehachse der Gewindespindel verfahrbar und um die Spindelachse verschwenkbar ist, mit einem Ausstoßkolben zum Ausstoßen eines Tresterkuchens aus der Brühkammer, wobei der Ausstoßkolben zwischen einer Ausstoßposition und einer Ruheposition verfahrbar ist, sowie mit Antriebsmitteln zwischen der Gewindespindel und dem Ausstoßkolben, die im Betrieb den Ausstoßkolben in die Ausstoßposition bzw. in die Ruheposition verbringen.

Im Besonderen betrifft die Erfindung einen Kaffeevollautomaten für Haushaltszwecke, wie er in Privathaushalten aufgestellt und betrieben wird. Die Spindelbrüheinheit umfasst regelmäßig einen Kolben, der in eine Brühkammer bzw. einen Brühzylinder eingefahren werden kann. Die dafür notwendige Bewegung der Brühkammer und des Kolbens relativ zueinander kann die Gewindespindel erzeugen, die ein Motor antreibt.

Bei herkömmlichen Kaffeevollautomaten, deren Brühkammer im Betrieb eine Schwenkbewegung vollzieht, treibt eine Bewegung der Brühkammer entlang der Spindelachse das Verfahren des Ausstoßkolbens innerhalb der Brühkammer an. Einen derartigen Kaffeevollautomaten offenbart die EP 2 170 131 A1. Zu einem ersten Zweck des Auseinanderfahrens der Brühkammer und des Brühkolbens - dem Entleeren und Befüllen der Brühkammer - tritt also ein zweiter Zweck als Antrieb des Ausstoßkolbens. Der Verfahrweg der Brühkammer bedingt eine lange Gewindespindel, die Baugröße und Gewicht des Kaffeevollautomaten vergrößern kann. Für den Benutzer ergeben sich daraus unter Umständen Nachteile in der Bedienung und Handhabung des Geräts. Dazu ist aus der EP 0 521 561 A1 eine Spindelbrüheinrichtung bekannt, deren Brühkammer und Brühkolben über einen Elektromotor und ein Schneckengetriebe angetrieben wird.

Der Erfindung liegt die Aufgabe zugrunde, die Abmessungen eines Kaffeevollautomaten hinsichtlich der Baugröße der Brüheinheit zu verringern.

Die Aufgabe wird durch einen Kaffeevollautomaten mit den in Anspruch 1 angegebenen : Merkmalen gelöst. Der eingangs genannte Kaffeevollautomat wird dazu erfindungsgemäß um eine erste Antriebsvorrichtung weitergebildet, die den Ausstoßkolben in die Ruheposition verbringt, und um eine zweite, separate bzw. davon separierte Antriebsvorrichtung, die den Ausstoßkolben in die Ausstoßposition verbringt. Die Erfindung wendet sich also davon ab, dass eine einzige Antriebsvorrichtung zwischen der Gewindespindel und dem Ausstoßkolben diesen zwischen der Ruheposition und der Ausstoßposition hin und her bewegt. Sie verfolgt vielmehr das Prinzip, das Verfahren des Ausstoßkolbens von einer Bewegung der Brühkammer entlang der Spindelachse zu entkoppeln und dafür jeweils eine eigene Antriebsvorrichtung vorzusehen.

Der Ausstoßkolben weist an seiner Oberseite eine Ausstoßfläche zum Hinausschieben des Tresterkuchens aus der Brühkammer auf. Er kann beispielsweise ein T-Kolben sein, an dessen Schaft die Koppelungsmittel angreifen. In der "Ruheposition" liegt der Ausstoßkolben in einem Bodenbereich der Brühkammer, die daher einen nach oben hin offenen Hohlraum bietet. Der Hohlraum dient nach einem Befüllen mit Kaffeepulver zum Brühen. Der Ausstoßkolben liegt daher regelmäßig während eines Brühvorgangs sowie bei einem Wiederbefüllen der Brühkammer in der Ruheposition. In der "Ausstoßposition" steht der Ausstoßkolben in einem oberen Bereich der Brühkammer, in der die Ausstoßfläche bündig bzw. leicht überstehend mit einem oberen Rand der Brühkammer abschließt. Die Ausstoßposition ermöglicht ein Entfernen des Tresterkuchens von der Ausstoßfläche durch Abstreifen z. B. durch eine Abstreifvorrichtung. Bei einer Anordnung des Ausstoßkolbens geneigt zu einer horizontalen Aufstandsfläche, z. B. bei einer um bis zu etwa 45° geneigten Anordnung der Gewindespindel zur Aufstandsfläche, kann das Abstreifen zusätzlich oder alternativ unter Ausnutzung der Schwerkraft erfolgen.

Das "Verfahren" der Brühkammer ist eine Translationsbewegung entlang der Spindelachse, das "Verschwenken" eine Rotationsbewegung um die Spindelachse. Als "Antriebsmittel" werden Mittel zur Kraft- bzw. Drehmomentübertragung von der Gewindespindel auf den Ausstoßkolben bezeichnet. Sie können mechanische Elemente umfassen, wie z. B. ein Getriebe oder eine Kulisse. Die Gewindespindel bildet regelmäßig die einzige Antriebsquelle der Antriebsmittel und damit auch der ersten und der zweiten Antriebsvorrichtung. Die erste und die zweite Antriebsvorrichtung können zusammen die Summe dieser Mittel bilden oder deren Bestandteile darstellen. Die "separate" zweite Antriebsvorrichtung besitzt keine gemeinsamen Elemente zur Kraftübertragung mit der ersten Antriebsvorrichtung.

Gegenüber dem Stand der Technik ermöglicht die Erfindung die Verwendung einer kürzeren Gewindespindel, indem der Verfahrweg der Brühkammer, der über die Erzeugung einer Öffnung zum Auswerfen des Tresterkuchens hinaus geht, eingespart werden kann. Dieser Vorteil wird mit Hilfe der zweiten, separaten Antriebsvorrichtung erzielt. Den unterschiedlichen Bewegungen des Verfahrens und des Verschwenkens der Brühkammer kann zum Einen jeweils eine eigene Antriebsvorrichtung zur Umlenkung eines Drehmoments von der Gewindespindel auf den Ausstoßkolben zugeordnet werden. Das Verfahren des Ausstoßkolbens ist dann nicht mehr zwingend an das Verfahren der Brühkammer gekoppelt, sondern kann auch durch ein Verschwenken der Brühkammer bewirkt werden. Alternativ kann die Gewindespindel den Ausstoßkolben ohne eine Anbindung an die Brühkammer direkt über die erste und die zweite Antriebsvorrichtung antreiben. Auch diese Ausführungsform entkoppelt das Verfahren des Ausstoßkolbens von einer Bewegung der Brühkammer entlang der Spindelachse. Die Erfindung kann günstigerweise sowohl bei einer Spindelbrüheinheit eingesetzt werden, in der die Brühkammer z. B. mittels eines Kulissensteins in einer Kulisse teilweise gleichzeitig verfahren und verschwenkt wird, als auch bei einer solchen Spindelbrüheinheit, in der das Verfahren und Verschwenken der Brühkammer sequenziell erfolgt (vgl. Anmeldung Nr. 201203693 des Anmelders vom selben Tag).

Nach einer bevorzugten Ausführungsform der Erfindung kann die erste Antriebsvorrichtung zum Verfahren des Ausstoßkolbens von der Ausstoßposition in die Ruheposition durch Verschwenken, insbesondere durch Ausschwenken der Brühkammer betätigt werden. Erfindungsgemäß wird dafür ausschließlich die Verschwenkbewegung der Brühkammer als Antrieb für den Ausstoßkolben genutzt. Dazu muss sie folglich die horizontale Rotation der Brühkammer in eine dazu senkrechte translatorische Bewegung des Ausstoßkolbens umsetzen. Sie kann mechanisch und prinzipiell als jegliche Art von Getriebe ausgebildet sein, das eine Kraftumlenkung zwischen der Brühkammer und dem Ausstoßkolben bewirkt. Durch eine geeignete Bemessung des Schwenkwinkels, des Schwenkradius und der Getriebeelemente kann die Länge der Rotationsbewegung auf den erforderlichen Verschiebeweg des Ausstoßkolbens sowie ihr zeitlicher Ablauf auf eine Gleichzeitigkeit oder einen zeitlichen Vor- oder Nachlauf gegenüber dem Verfahren des Ausstoßkolbens eingestellt werden.

Nach einer weiteren vorteilhaften Ausgestaltungsform der Erfindung kann die zweite Antriebsvorrichtung zum Verfahren des Ausstoßkolbens von der Ruheposition in die Ausstoßposition durch Verfahren der Brühkammer aktiviert werden. Das Verfahren des Ausstoßkolbens von der Ruheposition in die Ausstoßposition erfolgt also unmittelbar mit dem Verfahren der Brühkammer. Dazu nutzt die zweite Antriebsvorrichtung die Verfahrbewegung der Brühkammer als Antrieb des Ausstoßkolbens. Die zweite Antriebsvorrichtung kann prinzipiell wie die erste und damit ebenfalls mechanisch ausgebildet sein und ein Getriebe und/oder Führungselemente umfassen, das/die eine Kraftumlenkung zwischen der Brühkammer und dem Ausstoßkolben bewirkt bzw. bewirken. Bei einem Verfahren der Brühkammer kann der Ausstoßkolben in einer ihr gegenüber über- oder untersetzten Geschwindigkeit verfahren oder z. B. durch eine Hemmeinrichtung lediglich am Mitverfahren gehindert werden.

Die erste Antriebsvorrichtung kann grundsätzlich als Kulissenführung zum Verfahren des Ausstoßkolbens ausgebildet sein. Nach einer weiteren bevorzugten Ausgestaltungsform kann sie einen Antrieb aus einer Zahnstange an einem Schaft des Ausstoßkolbens sowie einem Zahnrad mit einem Hebel umfassen, der durch eine Relativbewegung der Brühkammer gegenüber einem ersten Anschlag am Gehäuse der Spindelbrüheinheit aktivierbar ist. Das Zahnrad ist ortsfest an der Brühkammer gelagert und steht formschlüssig in Eingriff mit der Zahnstange. Der Hebel ist drehfest am Zahnrad angeordnet und dreht es bei Kontakt mit dem ersten Anschlag, wodurch der Ausstoßkolben in einer Richtung entgegengesetzt zum Brühkolben ausgefahren wird. Gemäß einer alternativen Ausführungsform kann das Zahnrad an Stelle des Hebels eine Drehfeder als Antrieb aufweisen. Die Drehfeder ist vorgespannt und kann über einen Taster entspannt werden. Der Taster liegt an einem Gegenanschlag am Zahnrad, der mit dem ersten Anschlag korrespondiert. Die Drehfeder entspannt sich immer dann, wenn der Taster beim Auftreffen auf den ersten Anschlag aktiviert wird. Daraus resultiert eine Drehung des Zahnrads, das daraufhin den Ausstoßkolben in einer Richtung entgegengesetzt zum Brühkolben verfährt.

Gemäß einer bevorzugten Ausgestaltungsform des Kaffeevollautomaten ist der erste Anschlag vorzugsweise derart am Aufnahmerahmen der Spindelbrüheinheit angeordnet, dass er beim Ausschwenken der Brühkammer, wie oben beschrieben, zumindest den Hebel auslenkt. Der erste Anschlag weist dazu eine definierte Anschlagsfläche auf, die mit einer Gegenanschlagsfläche am Zahnrad korrespondiert. Er kann dazu ausgebildet sein, anschließend ein weiteres Ausschwenken der Brühkammer zu blockieren. Alternativ kann ein anderer, separater Anschlag, z. B. eine Gehäusefläche, das Ausschwenken der Brühkammer blockieren. Der erfindungsgemäße Antrieb bietet den Vorteil konstruktiver Einfachheit und zuverlässiger Funktion.

Nach einer weiteren vorteilhaften Ausgestaltung der Erfindung kann die zweite Antriebsvorrichtung einen zweiten Anschlag zum Antrieb des Ausstoßkolbens beim Verfahren der Brühkammer in der Verfahrrichtung umfassen, der in einer Richtung quer zur Verfahrrichtung bewegbar ist und ein Rückstellmittel aufweist. Der zweite Anschlag liegt ortsfest am Aufnahmerahmen der Brüheinheit. Er stoppt den Ausstoßkolben bei einem Abwärtsfahren der Brühkammer, sobald der Schaft auf ihn trifft. Der Ausstoßkolben bewegt sich dann relativ zur Brühkammer, und zwar in einer Gegenrichtung zur Brühkammerbewegung. "Bewegbar" bedeutet, dass der zweite Anschlag aus der Verfahrrichtung des Ausstoßkolbens verschoben, verkippt oder verschwenkt werden kann. Seine Bewegbarkeit in einer Richtung "quer" zur Verfahrrichtung ist als weitgehend quer bzw. senkrecht zu verstehen. Sie kann also auch in einem geringen Winkel zur Verfahrrichtung erfolgen. Ein nicht bewegbarer Anschlag müsste tiefer unter dem Brühkolben liegen, um ein Einschwenken der Brühkammer samt dem abgesenkten Ausstoßkolben in der Ruheposition zu ermöglichen. Der bewegbare zweite Anschlag lässt demgegenüber eine Anordnung näher am Brühkolben zu und spart dadurch in der Verfahrrichtung Bauraum ein. Als Rückstellmittel kann zweite Anschlag vorzugsweise in sich elastisch ausgebildet sein.

Nach einer weiteren vorteilhaften Ausgestaltung kann eine Feder, z. B. eine Dreh-, Zug- oder Druckfeder als Rückstellmittel eines verkippbaren zweiten Anschlags dienen. Sie erfordert nur wenig Platz und lässt sich zusammen mit dem zweiten Anschlag an dessen Drehpunkt montieren. Der zweite Anschlag kann L-förmig ausgebildet sein, so dass er einerseits eine ausreichende Anschlagsfläche für den Schaft des Ausstoßkolbens bietet und andererseits sein Drehpunkt außerhalb der Verfahrrichtung liegt.

Der zweite Anschlag kann beispielsweise durch einen Aktuator verkippt werden, wenn die Brühkammer eingeschwenkt wird. Nach einer bevorzugten Ausgestaltungsform der Erfindung verkippt der Ausstoßkolben bei einem Verschwenken der Brühkammer in einer Einschwenkrichtung den zweiten Anschlag. Dazu kann sein Schaft in der Einschwenkbewegung seitlich gegen den zweiten Anschlag drücken und dadurch ein Kippmoment in der Einschwenkrichtung auslösen. Dadurch kann ein zusätzlicher Antrieb des Kippanschlags entfallen.

Gemäß einer weiteren bevorzugten Ausführungsform kann der Kaffeevollautomat ein gegenläufig zur Brühkammer verschwenkbares Abstreifelement zum Abstreifen des Tresterkuchens von der Brühkammer umfassen, wobei er ein Getriebe zum Verschwenken des Abstreifelements durch Koppelung an das Verschwenken der Brühkammer aufweist, welches das Abstreifen in einer Phase des Verschwenkens der Brühkammer durchführt, die vor dem Verfahren des Ausstoßkolbens liegt. Das Abstreifelement kann vorzugsweise koaxial zur Spindelachse verschwenkbar und entlang der Spindelachse verfahrbar ausgebildet sein. Das Getriebe kann als Zahnstangen-, Kegelrad- oder Kronradgetriebe ausgebildet sein. Das Zahnstangengetriebe kann vorzugsweise eine erste Zahnstange an einem Gehäuse der Brühkammer und eine zweite Zahnstange an einem Gehäuse des Abstreifelements umfassen. Sie liegen einander gegenüber und stehen mit dem Zwischenrad in Eingriff, das um seine Achse drehbar und entlang der Spindelachse verschiebbar im Gehäuse der Spindelbrüheinheit gelagert ist und aufrecht zwischen ihnen steht. Bei einem Verschwenken der Brühkammer erfolgt durch Kraftumlenkung mittels des Zahnstangengetriebes zwangsweise das gegenläufige Verschwenken des Abstreifelements in einer Art Scherenbewegung. Die zeitliche Koordinierung mit dem Verfahren des Ausstoßkolbens kann mittels einer geeigneten Über- oder Untersetzung des Zahnstangengetriebes erzielt werden (vgl. Anmeldung Nr. 201203222 des Anmelders vom selben Tag).

Vorzugsweise kann der Kaffeevollautomat derart ausgebildet sein, dass das Verschwenken der Brühkammer in einer Verschwenkebene orthogonal zu einer Spindelachse einerseits und das Verfahren der Brühkammer in einer Verfahrrichtung parallel zur Spindelachse anderseits sequenziell erfolgen. "Sequenziell" bedeutet, dass das Verschwenken und das Verfahren der Brühkammer nacheinander, also ohne jegliche zeitliche Überdeckung abläuft, so dass eine Bewegung in einer ersten Richtung, z. B. das Verfahren der Brühkammer von einer Ausgangsposition zu einer Endposition, abgeschlossen ist, bevor eine Bewegung in einer zweiten Richtung, z. B. das Verschwenken, einsetzt. Der Vorteil der Erfindung liegt darin, dass mit der Entkoppelung der Verfahr- und der Verschwenkbewegung der Brühkammer die erste Antriebsvorrichtung und die zweite Antriebsvorrichtung konstruktiv deutlich einfacher und Platz sparender miteinander in der Spindelbrüheinheit angeordnet werden können als bei einer intermittierenden Abfolge der Verschwenk- und der Verfahrbewegung. Wenn das Verschwenken der Brühkammer beispielsweise durch ein Mitdrehen bei einer Rotation der Gewindespindel erfolgt anstatt mittels einer Kraftumlenkung aus dem Verfahren der Brühkammer, kann der vertikale Verfahrweg der Brühkammer und damit die Spindellänge weiter verkürzt werden.

Das Prinzip der Erfindung wird im Folgenden anhand von Zeichnungen beispielshalber noch näher erläutert. Es zeigen
- Figur 1:: einen schematischen Vertikalschnitt einer Spindelbrüheinheit eines Kaffeevollautomaten,
- Figur 2:: eine Prinzipdarstellung von Teilen einer Brühvorrichtung des Kaffeevollautomaten in einer ersten Position,
- Figur 3:: eine mit Fig. 2 vergleichbare Darstellung in einer zweiten Position,
- Figur 4 bis 8:: jeweils eine mit Fig. 2 vergleichbare Darstellung in einer anschließenden Position.

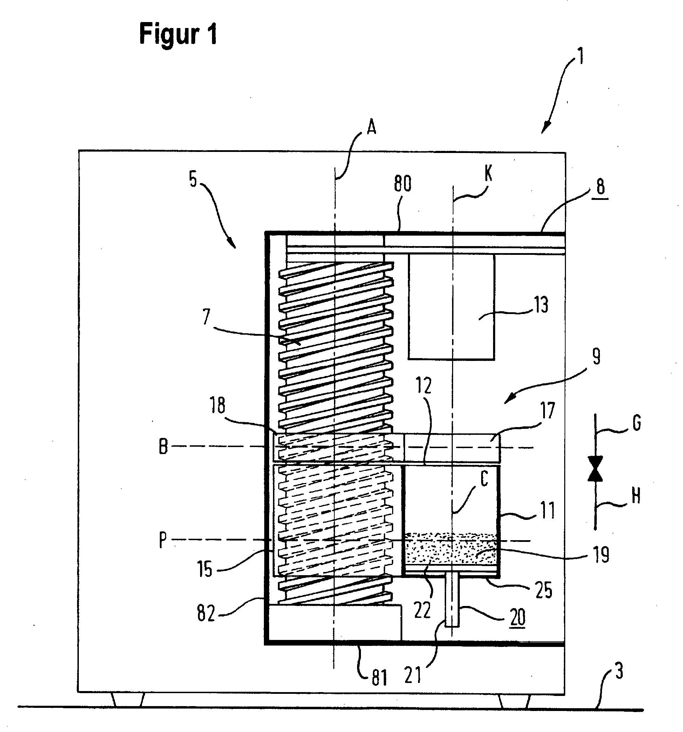

Figur 1 zeigt einen schematischen Vertikalschnitt eines Kaffeevollautomaten 1, der auf einer horizontalen Aufstandsfläche 3 steht, zum Beispiel einer Küchenarbeitsplatte. Innerhalb des Kaffeevollautomaten 1 ist eine Spindelbrüheinheit 5 angeordnet, die ein C-förmiger Aufnahmerahmen 8 umgibt. Er besteht aus einer horizontalen Deckplatte 80, einer horizontalen Bodenplatte 81 und einem Ständer 82 als vertikales Segment des Rahmens 8. Im Rahmen 8 ist eine vertikale Gewindespindel 7 sowie eine Brühvorrichtung 9 mit einer Brühkammer 11 und einem Brühkolben 13 angeordnet. Der Brühkolben 13 hängt an der Deckplatte 80. An der Deckplatte 80 und der Bodenplatte 81 ist die Gewindespindel 7 drehbar gelagert und mit einem nicht dargestellten Antrieb, zum Beispiel einem Elektromotor, verbunden. Die Brühkammer 11 ist als zylindrischer Hohlkörper ausgebildet, in den durch seine oberseitige Öffnung 12 der ebenfalls zylindrische Brühkolben 13 passt. Die Längsachse C der Brühkammer 11 verläuft daher in der abgebildeten Position koaxial zur Längsachse K des Brühkolbens 13.

Ein waagerechter Verbindungsarm 15 als Spindelmutter verbindet die Brühkammer 11 mit der Gewindespindel 7. Er ist in einem oberen Bereich des Ständers 82 bis zu einer Verschwenkebene P gegen ein Mitdrehen auf der Spindel 7 vertikal geführt. Eine Linksdrehung der Gewindespindel 7 verfährt die Brühkammer 11 in einer Ausfahrrichtung G vom Brühkolben 13 aus abwärts, eine Rechtsdrehung in einer Einfahrrichtung H hin zum Brühkolben 13 bzw. aufwärts. In der waagerechten Verschwenkebene P angekommen, verschwenkt der Verbindungsarm 15 und damit die Brühkammer 11 um die Spindelachse A.

Ein am Ständer 82 drehfest geführter Haltering 18 um die Gewindespindel 7 hält ein Abstreifelement 17, das unmittelbar oberhalb der Öffnung 12 der Brühkammer 11 liegt.

In der Brühkammer 11 ist ein T-Kolben 20 mit einer waagrechten Kolbenscheibe 22 und einem senkrechten Schaft 21 angeordnet. Der Schaft 21 durchdringt einen Boden 25 der Brühkammer 11 und steht im Betrieb stets koaxial zur Brühkammerachse C. Der T-Kolben 20 dient zum Ausstoßen eines Tresterkuchens 19 aus der Brühkammer 11. Das Abstreifelement 17 kann den Tresterkuchen 19 vom T-Kolben 20 in einer horizontalen Verschwenkebene B abstreifen. Die erfindungsgemäße Ansteuerung des T-Kolbens 20 ist in dieser Darstellung aus Gründen der Übersichtlichkeit noch nicht gezeigt, sondern wird in den nachfolgenden Figuren im Detail und in den jeweiligen Positionen während eines Brühprozesses dargestellt:

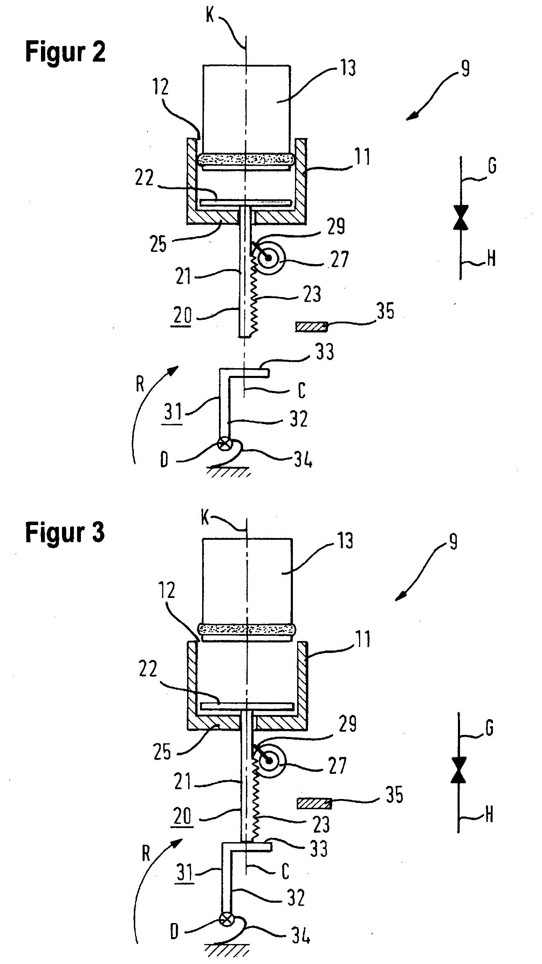

Figur 2 zeigt in einer Prinzipdarstellung nur noch erfindungswesentliche Teile der Brühvorrichtung 9 des Kaffeevollautomaten 1 nach Figur 1 in einer Position nach einem abgeschlossenen Brühvorgang. Der Brühkolben 13 steckt in der Brühkammer 11. Der T-Kolben 20 liegt auf dem Boden der Brühkammer 11 auf und schließt mit seiner Kolbenscheibe 22 zwischen sich und dem Brühkolben 13 einen ausgelaugten Tresterkuchen [nicht dargestellt] ein. Diese Position des T-Kolbens 20 in Bezug auf die Brühkammer 11 ist seine Ruheposition.

An der Brühkammer 11, nämlich unterhalb ihres Bodens 25, ist ein Zahnrad 27 angebracht. Es greift in eine Zahnstange 23 am Schaft 21 ein und steht mit diesem permanent (vgl. Figuren 2 bis 8) in Eingriff. Am Zahnrad 27 ist ein Hebel 29 drehmomentenfest montiert. Ebenfalls auf der rechten Seite des T-Kolbens 20 liegt in einer gewissen Distanz dazu ein Rahmenanschlag 35, der ortsfest, z. B. am Ständer 82 des Aufnahmerahmens 8, angeordnet ist. Die Zahnstange 23, das Zahnrad 27 mit dem Hebel 29 sowie der Anschlag 35 dienen gemeinsam als erste Antriebsvorrichtung.

Unterhalb der Brühkammer 11, und zwar im Verlauf der Brühkolbenachse K, ist ein L-förmiger Kippanschlag 31 rahmenfest angeordnet. Er besteht aus einem senkrechten Stiel 32 und einem waagerechten Anschlag 33 und ist nach links kippbar um eine Kippachse D. Der Anschlag 33 steht einer Stirnseite des Schafts 21 gegenüber und begrenzt damit einen Verfahrweg des T-Kolbens 20 in einer Richtung G abwärts. Der Kippanschlag 31 ist mit einer Drehfeder 34 verbunden, die ihn in die dargestellte Ausgangsposition drückt. Der Kippanschlag 31 mit dem Stiel 32 und dem Anschlag 33 sowie der Drehfeder 34 dienen gemeinsam als zweite Antriebsvorrichtung.

In Figur 3 ist die Brühkammer 11 bereits ein Stück in der Richtung G abwärts gefahren und hat den T-Kolben 20 und das Zahnrad 27 in einer gegenüber Figur 2 unveränderten Position mitgenommen. Das weitere Abwärtsfahren des T-Kolbens 20 stoppt in Figur 3, weil sein Schaft 21 auf den Anschlag 33 des Kippanschlags 31 stößt.

Ein weiteres Abwärtsfahren der Brühkammer 11 verschiebt den T-Kolben relativ zu ihr, so dass er seine Ruheposition verlässt und die Kolbenscheibe 22 den Tresterkuchen [nicht dargestellt] zur Öffnung 12 hin schiebt. Da das Zahnrad 27 an der Brühkammer 11 drehbar gelagert ist und in die Zahnstange 23 eingreift, wird es beim weiteren Abwärtsfahren der Brühkammer 11 von der Zahnstange 23 gegen den Uhrzeigersinn etwa um eine Viertelumdrehung angetrieben.

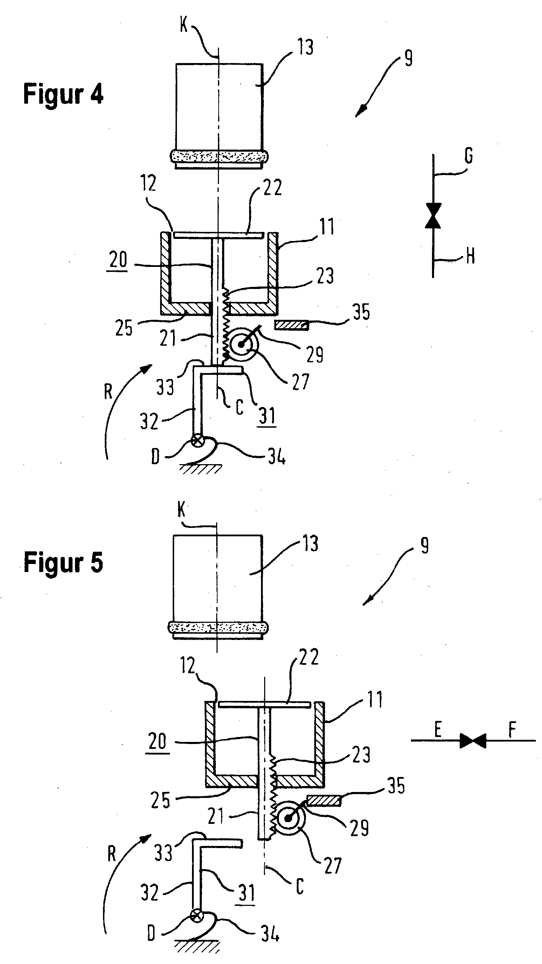

Die in Figur 4 gezeigte Position der Brühvorrichtung 9 zeigt einen Abschluss des Abwärtsfahrens der Brühkammer 11. Der T-Kolben 20 befindet sich relativ zum Kippanschlag 31 und zum Brühkolben 13 weiterhin in derselben Position wie in Figur 3, der Brühkammer 11 gegenüber befindet er sich aber in seiner Ausstoßposition an deren oberen Rand der Öffnung 12: Er hat den Tresterkuchen [nicht dargestellt] aus der Brühkammer 11 vollständig hinausgeschoben.

Mit Erreichen der Position gemäß Figur 4 ist das Abwärtsfahren der Brühkammer beendet. Ab jetzt beginnt ein Verschwenken der Brühkammer 11 in der Verschwenkebene P gemäß Figur 1. Dadurch wird an dem Abstreifelement 17 (siehe Figur 1) der Tresterkuchen [nicht dargestellt] von der Kolbenscheibe 22 abgestreift. Während des Abstreifens stützt der Anschlag 33 den Schaft 21 gegen ein weiteres Abwärtsfahren ab, sodass die Kolbenscheibe 22 zwangsweise in einer Position weitgehend bündig mit dem Rand der Brühkammer 11 steht.

In Figur 5 zeigt die Darstellung der Brühvorrichtung 9 diesen Schritt des Verschwenkvorgangs der Brühkammer 11, bei dem der Schaft 21 des T-Kolbens 20 vom Anschlag 33 in horizontaler Richtung nach rechts weggezogen wird. Nach ihrer Entleerung schwenkt die Brühkammer 11 samt T-Kolben 20 und Zahnrad 27 weiter in einer Richtung E in der Verschwenkebene P nach rechts aus.

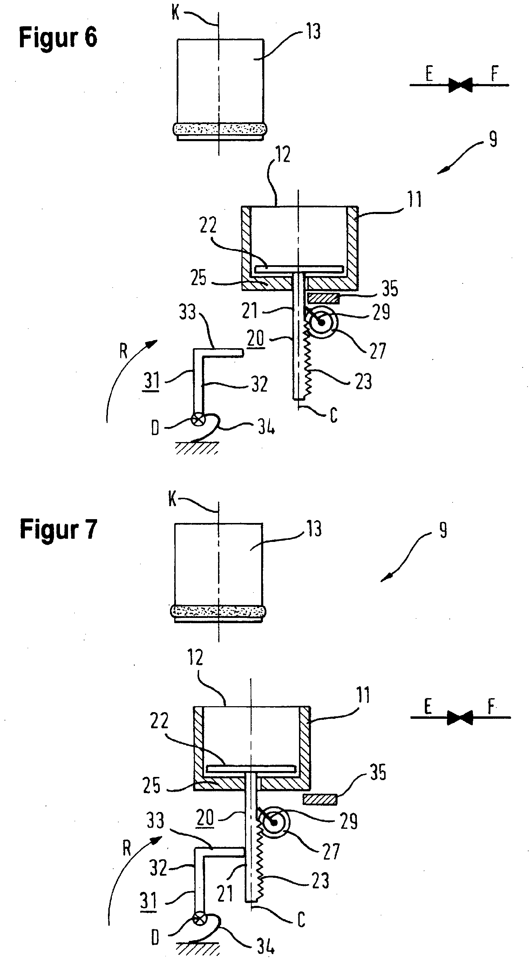

Die in Figur 6 gezeigte Schnittansicht der Brühvorrichtung 9 zeigt den Abschluss des Ausschwenkens der Brühkammer 11, in der sie mit Kaffeepulver befüllt werden kann. Diese Befüllposition definiert der Gehäuseanschlag 35, der das Ausschwenken stoppt, indem der Schaft 21 an ihm anschlägt.

Vorher aber hat er bereits den Hebel 29 betätigt: Er stand zu Beginn des Verschwenkens (vgl. Figur 4) in einer vom Schaft 21 weg geneigten Position, so dass er beim Ausschwenken der Brühkammer 11 als erstes verschwenktes Element den Gehäuseanschlag 35 berührt (vgl. Figur 5). Nach dem Auftreffen auf den Gehäuseanschlag 35 bewegt sich der Hebel 29 infolge des weiteren Ausschwenkens der Brühkammer 11 um circa 90° gegen den Uhrzeigersinn, bis der Gehäuseanschlag 35 am Schaft 21 des T-Kolbens 20 anschlägt und dadurch stoppt. Die Drehbewegung des Hebels 29 führt zu einem Verdrehen des Zahnrads 27, das dadurch die Zahnstange 23 und damit den T-Kolben 20 antreibt, der in seine Ruheposition abwärts verfährt (vgl. Figur 6). Da die Brühkammer 11 inzwischen aus der Flucht der Kolbenachse K ausgeschwenkt wurde, in der auch der Kippanschlag 31 liegt, kann jener das Abwärtsfahren des T-Kolbens 20 in die Richtung G nicht behindern.

Nach dem Befüllen der Brühkammer 11 mit frischem Kaffeepulver beginnt ihr Einschwenken in der Richtung F. Figur 7 zeigt eine Zwischenposition beim Einschwenken der Brühkammer 11 samt T-Kolben 20 und Zahnrad 27: Der Schaft 21 des T-Kolbens 20 trifft beim Einschwenken in der Richtung F nach links auf den Anschlag 33, noch bevor die Brühkammerachse C und die Kolbenachse K fluchten. Um diese Position zu erreichen, wird die Brühkammer 11 über die in Figur 7 gezeigte Position weiter eingeschwenkt.

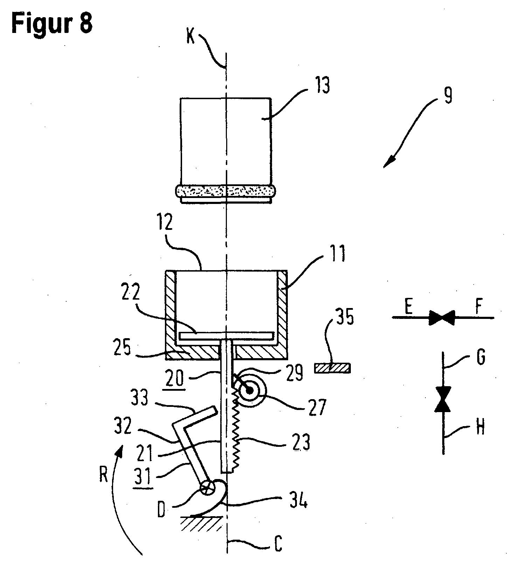

Sie gelangt schließlich in die in Figur 8 gezeigte Position. Der Schaft 21 drückt dafür den Kippanschlag 31 nach links und verkippt ihn um die Kippachse D. Diese Position zeigt ein Ende des Einschwenkens der Brühkammer 11, ab der das Aufwärtsfahren der Brühkammer 11 in die Richtung H beginnt.

Zum Beginn eines neuen Brühvorgangs verfahren die Brühkammer 11 und der T-Kolben 20 angetrieben durch eine Rechtsdrehung der Gewindespindel 7 in eine Ausgangsposition gemäß Figur 2. Wenn der Schaft 21 beim Aufwärtsfahren das Rückstellmoment R der Drehfeder 34 nicht mehr auffängt, zieht es den Kippanschlag 31 nach rechts in seine Ausgangsposition (vgl. Figur 2).

Die beschriebenen Bestandteile der Spindelbrüheinheit und insbesondere der ersten und der zweiten Antriebsvorrichtung können - mit Ausnahme der Drehfeder 34 - z. B. als Kunststoff-Spritzgussteile ausgebildet sein. Dies unterstützt eine kostengünstige Herstellung.

Da es sich bei den vorhergehenden, detailliert beschriebenen Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Brühvorrichtung in anderer Form als in der hier beschriebenen erfolgen. Ebenso können der Kippanschlag und der Gehäuseanschlag in einer anderen Form ausgestaltet sein, wenn dies aus Platzgründen bzw. designerischen Gründen notwendig ist. Der Gegenstand der Erfindung lässt sich zudem mit den Lehren der Anmeldungen Nr. 201203222 und Nr. 201203225 des Anmelders vom selben Tage vorteilhaft kombinieren. Weiter schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 3: Aufstandsfläche
- 5: Spindelbrüheinheit
- 7: Gewindespindel
- 8: Aufnahmerahmen
- 9: Brühvorrichtung
- 11: Brühkammer
- 12: Öffnung
- 13: Brühkolben
- 15: Verbindungsarm
- 17: Abstreifelement
- 18: Haltering
- 19: Tresterkuchen
- 20: Ausstoß- oder T-Kolben
- 21: Schaft
- 22: Kolbenscheibe
- 23: Zahnstange
- 25: Boden
- 27: Zahnrad
- 29: Hebel
- 31: Kippanschlag
- 32: Stiel
- 33: Anschlag
- 34: Drehfeder
- 35: Rahmenanschlag
- 80: Deckplatte
- 81: Bodenplatte
- 82: Ständer

- A: Spindelachse
- B: Verschwenkebene
- C: Brühkammerachse
- D: Kippachse
- E: Ausschwenkrichtung
- F: Einschwenkrichtung G Ausfahrrichtung H Einfahrrichtung
- K: Brühkolbenachse
- P: Verschwenkebene
- R: Rückstellwirkung

## Patentansprüche

1. Kaffeevollautomat (1), umfassend eine Spindelbrüheinheit (5) mit einer Brühkammer (11) und einer Gewindespindel (7) zum Antrieb der Brühkammer (11), wobei die Brühkammer (11) parallel zu einer Drehachse (A) der Gewindespindel (7) verfahrbar und um die Spindelachse (A) verschwenkbar ist, wobei ein Verfahren der Brühkammer (11) eine Translationsbewegung entlang der Spindelachse (A) ist und ein Verschwenken eine Rotationsbewegung um die Spindelachse (A) ist, mit einem Ausstoßkolben (20) zum Ausstoßen eines Tresterkuchens (19) aus der Brühkammer (11), wobei der Ausstoßkolben (20) zwischen einer Ausstoßposition und einer Ruheposition verfahrbar ist, sowie mit Antriebsmitteln zwischen der Gewindespindel (7) und dem Ausstoßkolben (20), die im Betrieb den Ausstoßkolben (20) antreiben,
**gekennzeichnet durch**
eine erste Antriebsvorrichtung (23, 27, 29, 35), die den Ausstoßkolben (20) in die Ruheposition verbringt, und eine zweite, separate Antriebsvorrichtung (31, 32, 33, 34), die den Ausstoßkolben (20) in die Ausstoßposition verbringt.

2. Kaffeevollautomat nach Anspruch 1, **dadurch gekennzeichnet, dass** die erste Antriebsvorrichtung (23, 27, 29, 35) zum Verfahren des Ausstoßkolbens (20) von der Ausstoßposition in die Ruheposition durch Verschwenken der Brühkammer (11) betätigt wird.

3. Kaffeevollautomat nach Anspruch 1 oder 2, **dadurch gekennzeichnet, dass** die zweite Antriebsvorrichtung (31, 32, 33, 34) zum Verfahren des Ausstoßkolbens (20) von der Ruheposition in die Ausstoßposition durch Verfahren der Brühkammer (11) aktiviert wird.

4. Kaffeevollautomat nach dem Anspruch 2 oder 3, **dadurch gekennzeichnet, dass** die erste Antriebsvorrichtung einen Antrieb aus einer Zahnstange (23) an einem Schaft (21) des Ausstoßkolbens (20, 21) sowie einem Zahnrad (27) mit einem Hebel (29) umfasst, der durch eine Relativbewegung der Brühkammer (11) zu einem ersten Anschlag (35) am Rahmen (80, 81, 82) der Spindelbrüheinheit (5) aktivierbar ist.

5. Kaffeevollautomat nach Anspruch 4, **dadurch gekennzeichnet, dass** der erste Anschlag (35) derart am Rahmen (80, 81, 82) angeordnet ist, dass er beim Ausschwenken der Brühkammer (11) zumindest den Hebel (29) auslenkt.

6. Kaffeevollautomat nach einem der Ansprüche 3 bis 5, **dadurch gekennzeichnet, dass** die zweite Antriebsvorrichtung einen zweiten Anschlag (31, 32, 33) zum Antrieb des Ausstoßkolbens (20) beim Verfahren der Brühkammer (11) in der Verfahrrichtung (G) umfasst, wobei der zweite Anschlag (31, 32, 33) in einer Richtung quer zur Verfahrrichtung (G, H) bewegbar ist und ein Rückstellmittel (34) aufweist.

7. Kaffeevollautomat nach dem obigen Anspruch, **gekennzeichnet durch** eine Feder (34) als Rückstellmittel eines verkippbaren Anschlags (31, 32, 33).

8. Kaffeevollautomat nach dem obigen Anspruch, **dadurch gekennzeichnet, dass** der Ausstoßkolben (20) bei einem Verschwenken der Brühkammer (11) in einer Einschwenkrichtung (F) den zweiten Anschlag (31, 32, 33) verkippt.

9. Kaffeevollautomat nach einem der vorhergehenden Ansprüche, mit einem gegenläufig zür Brühkammer (11) verschwenkbaren Abstreifelement (17) zum Abstreifen des Tresterkuchens (19) von der Brühkammer (11), **gekennzeichnet durch** ein Getriebe zwischen der Brühkammer (11) und dem Abstreifelement (17) zum zur Brühkammer (11) gegenläufigen Verschwenken des Abstreifelements (17) in einer Phase vor dem Verfahren des Ausstoßkolbens (20).

10. Kaffeevollautomat nach einem der vorhergehenden Ansprüche, **dadurch gekennzeichnet, dass** das Verschwenken der Brühkammer (11) in einer Verschwenkebene (P) orthogonal zu einer Spindelachse (A) einerseits und das Verfahren der Brühkammer (11) in einer Verfahrrichtung (G, H) parallel zur Spindelachse (A) anderseits sequenziell erfolgen.

## Claims

1. Fully automatic coffee maker (1), comprising a spindle brewing unit (5) with a brewing chamber (11) and a threaded spindle (7) for driving the brewing chamber (11), wherein the brewing chamber (11) can be moved in parallel to an axis of rotation (A) of the threaded spindle (7) and can be pivoted about the spindle axis (A), wherein a movement of the brewing chamber (11) is a translational movement along the spindle axis (A) and a pivoting is a rotational movement about the spindle axis (A), with an ejector piston (20) for ejecting a pomace cake (19) out of the brewing chamber (11), wherein the ejector piston (20) can be moved between an ejection position and a rest position, and with drive means between the threaded spindle (7) and the ejector piston (20), which drive the ejector piston (20) during operation,
**characterised by**
a first drive apparatus (23, 27, 29, 35), which brings the ejector piston (20) into the rest position, and a second, separate drive apparatus (31, 32, 33, 34) which brings the ejector piston (20) into the ejection position.

2. Fully automatic coffee maker according to claim 1, **characterised in that** the first drive apparatus (23, 27, 29, 35) is actuated in order to move the ejector piston (20) from the ejection position into the rest position by pivoting the brewing chamber (11).

3. Fully automatic coffee maker according to claim 1 or 2, **characterised in that** the second drive apparatus (31, 32, 33, 34) is activated in order to move the ejector piston (20) from the rest position into the ejection position by moving the brewing chamber (11).

4. Fully automatic coffee maker according to claim 2 or 3, **characterised in that** the first drive apparatus comprises a drive made of a gear rack (23) on a shaft (21) of the ejector piston (20, 21) and a gear (27) with a lever (29), which can be activated by a relative movement of the brewing chamber (11) to a first limit stop (35) on the frame (80, 81, 82) of the spindle brewing unit (5).

5. Fully automatic coffee maker according to claim 4, **characterised in that** the first limit stop (35) is arranged on the frame (80, 81, 82) such that it deflects at least the lever (29) when pivoting out the brewing chamber (11).

6. Fully automatic coffee maker according to one of claims 3 to 5, **characterised in that** the second drive apparatus comprises a second limit stop (31, 32, 33) for driving the ejector piston (20) when moving the brewing chamber (11) in the movement direction (G), wherein the second limit stop (31, 32, 33) can be moved in a direction perpendicular to the movement direction (G, H) and has a reset means (34).

7. Fully automatic coffee maker according to the above claim, **characterised by** a spring (34) as a reset means of a tiltable limit stop (31, 32, 33).

8. Fully automatic coffee maker according to the above claim, **characterised in that** the ejector piston (20) tilts the second limit stop (31, 32, 33) when pivoting the brewing chamber (11) in a swivel-in direction (F).

9. Fully automatic coffee maker according to one of the preceding claims, with a scraper element (17) which can be pivoted in the opposite direction to the brewing chamber (11) for scraping the pomace cake (19) from the brewing chamber (11), **characterised by** a transmission between the brewing chamber (11) and the scraper element (17) for pivoting the scraper element (17), in an opposite direction to the brewing chamber (11), in a phase prior to moving the ejector piston (20).

10. Fully automatic coffee maker according to one of the preceding claims, **characterised in that** the pivoting of the brewing chamber (11) in a pivot plane (P) takes place orthogonally to a spindle axis (A) on the one hand and the movement of the brewing chamber (11) in a movement direction (G, H) takes place in parallel to the spindle axis (A) on the other hand, sequentially.

## Revendications

1. Machine à café intégralement automatique (1), comprenant une unité d'échaudage à broche (5) avec une chambre d'échaudage (11) et une broche filetée (7) afin d'actionner la chambre d'échaudage (11), dans laquelle la chambre d'échaudage (11) est mobile parallèlement à un axe de rotation (A) de la broche filetée (7) et pivote autour de l'axe de la broche (A), dans lequel un déplacement de la chambre d'échaudage (11) est un mouvement translatoire le long de l'axe de la broche (A) et un pivotement est un mouvement rotatif autour de l'axe de la broche (A), avec un piston d'éjection (20) pour l'expulsion d'un pain de marc (19) de la chambre d'échaudage (11), le piston d'éjection (20) étant déplaçable entre une position d'expulsion et une position de repos, et avec des moyens d'actionnement entre la broche filetée (7) et le piston d'éjection (20) qui, en fonctionnement, actionnent le piston d'éjection (20), **caractérisée par** un premier dispositif d'actionnement (23, 27, 29, 35) qui place le piston d'éjection (20) en position de repos et un deuxième dispositif d'actionnement distinct (31, 32, 33, 34) qui place le piston d'éjection (20) en position d'éjection.

2. Machine à café intégralement automatique selon la revendication 1, **caractérisée en ce que** le premier dispositif d'actionnement (23, 27, 29, 35) pour le déplacement du piston d'éjection (20) est actionné de la position d'injection vers la position de repos par un pivotement de la chambre d'échaudage (11).

3. Machine à café intégralement automatique selon la revendication 1 ou 2, **caractérisée en ce que** le deuxième dispositif d'actionnement (31, 32, 33, 34) pour le déplacement du piston d'éjection (20) est activé de la position de repos vers la position d'éjection par un déplacement de la chambre d'échaudage (11).

4. Machine à café intégralement automatique selon la revendication 2 ou 3, **caractérisée en ce que** le premier dispositif d'actionnement comprend un actionnement composé d'une crémaillère (23) sur un manche (21) du piston d'éjection (20, 21) ainsi qu'une roue dentée (27) avec un levier (29), activable via un mouvement relatif de la chambre d'échaudage (11) par rapport à une première butée (35) sur le cadre (80, 81, 82) de l'unité d'échaudage à broche (5).

5. Machine à café intégralement automatique selon la revendication 4, **caractérisée en ce que** la première butée (35) est disposée sur le cadre (80, 81, 82) de telle manière quelle dévie au moins le levier (29) lors du pivotement vers l'extérieur de la chambre d'échaudage (11).

6. Machine à café intégralement automatique selon l'une des revendications 3 à 5, **caractérisée en ce que** le deuxième dispositif d'actionnement comprend une deuxième butée (31, 32, 33) pour l'actionnement du piston d'éjection (20) lors du déplacement de la chambre d'échaudage (11) dans le sens de déplacement (G), dans laquelle la deuxième butée (31, 32, 33) est déplaçable dans un sens transversal par rapport au sens de déplacement (G, H) et présente un moyen de rappel (34).

7. Machine à café intégralement automatique selon la revendication précédente, **caractérisée par** un ressort (34) comme moyen de rappel d'une butée basculable (31, 32, 33).

8. Machine à café intégralement automatique selon la revendication précédente, **caractérisée en ce que** le piston d'éjection (20) bascule la deuxième butée (31, 32, 33) lors d'un pivotement de la chambre d'échaudage (11) dans un sens de pivotement vers l'intérieur (F).

9. Machine à café intégralement automatique selon l'une des revendications précédentes, avec un élément de retrait pivotant (17) de manière opposée à la chambre d'échaudage (11) pour le retrait du pain de marc (19) de la chambre d'échaudage (11), **caractérisée par** un entrainement entre la chambre d'échaudage (11) et l'élément de retrait (17) afin de faire pivoter l'élément de retrait (17) de manière opposée à la chambre d'échaudage (11) dans une phase qui précède le déplacement du piston d'éjection (20).

10. Machine à café intégralement automatique selon l'une des revendications précédentes, **caractérisé en ce que** le pivotement de la chambre d'échaudage (11) s'opère séquentiellement dans un plan de pivotement (P) orthogonal par rapport à un axe de la broche (A) d'une part et le déplacement de la chambre d'échaudage (11) s'opère séquentiellement dans un sens de déplacement (G, H) parallèle à l'axe de la broche (A) d'autre part.
